# EUROPEAN PATENT SPECIFICATION

(11) **EP 3 470 552 B1**
(45) Date of publication and mention of the grant of the patent: **30.12.2020**
(21) Application number: 17196285.5
(22) Date of filing: 13.10.2017
(51) Int. Cl.: C25D 3/38, C08G 65/26, C25D 7/12

(54) **AN ACIDIC AQUEOUS COMPOSITION FOR ELECTROLYTICALLY DEPOSITING A COPPER DEPOSIT**
SAURE WÄSSRIGE ZUSAMMENSETZUNG ZUR ELEKTROLYTISCHEN ABSCHEIDUNG EINER KUPFERABSCHEIDUNG
COMPOSITION AQUEUSE ACIDE POUR DÉPOSER ÉLECTROLYTIQUEMENT UN DÉPÔT DE CUIVRE

(43) Date of publication of application: 17.04.2019
(73) Proprietor: Atotech Deutschland GmbH, 10553 Berlin (DE)
(72) Inventor: Ackermann, Stefanie, Dr., 10553 Berlin (DE); Si, Kun, Dr., 10553 Berlin (DE); Bolton, Onas, Dr., 10553 Berlin (DE); Bewick, Nicholas, Dr., 10553 Berlin (DE); Adolf, James, Dr., 10553 Berlin (DE); Wu, Jun, Dr., 10553 Berlin (DE)
(74) Representative: Atotech Deutschland GmbH

(56) References cited:
- CN-A- 103 992 782
- JP-A- 2000 026 994
- JP-A- 2004 137 530
- US-A- 4 110 224

## Description

### Field of the Invention

The present invention relates to an acidic aqueous composition for electrolytically depositing a copper deposit, the composition comprising
(i) copper (II) ions,
(ii) one or more than one compound of formula (Ia) 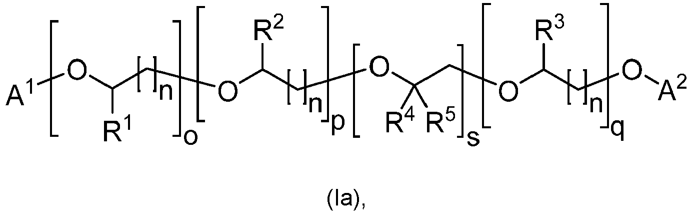
(iii) one, two, three or more than three further compounds, which are different from the compound of formula (Ia),
with the definitions given throughout the text, the use of the acidic aqueous composition for electrolytically depositing a copper deposit, the use of certain compounds of formula (Ia) as surfactant in preferably an acidic aqueous composition, a method for electrolytically depositing a copper deposit onto a substrate, and a compound of formula (Ia), preferably a specific compound derived from formula (Ia).

### Background of the Invention

Generally, acidic aqueous compositions comprising copper (II) ions are typically used for manufacturing printed circuit boards (PCB) and IC substrates where structures like trenches, through holes (TH), blind micro vias (BMV) and pillar bumps need to be filled or build up with copper. Another application for such compositions is filling of structures such as through silicon vias (TSV) and dual damascene (DD) plating or forming redistribution layers (RDL) and pillar bumps in and on semiconducting substrates. Another application which is becoming more demanding is filling through glass vias, i.e. holes and related structures in glass substrates with copper or copper alloys by electroplating.

With the progressive miniaturization of printed circuit boards, design and complexity are constantly increasing. It is typically the aim to increase the calculating capacity and/or functionality in an ever decreasing space. Along with it, the geometry of above mentioned structures is becoming more and more complex and sophisticated. The aspect ratio, which is typically more and more increasing, is for example such a feature describing the complexity of said geometry.

It is generally accepted that structures exhibiting comparatively high aspect ratios (e.g. in the range from 3:1 to 6:1) demand well adapted compositions for electrolytically depositing the copper deposit. In order to adequately fill with or build up the respective copper deposit, a respective acidic aqueous composition needs to reasonably wet each structure. Furthermore, an adequate overpotential needs to be provided by the composition. Therefore, a respective composition typically comprises a number of different compounds in order to achieve and maintain such parameters; typically surfactants, suppressors, accelerators, and levelers. If those compounds work together well, said structures can be void-free filled with copper.

In order to obtain a reasonable wetting of the structures, typically surfactants are utilized in a respective acidic aqueous composition in order to lower the surface tension to a reasonable degree. However, in many cases such surfactants negatively affect the overpotential of the entire composition and, thus, the deposited copper deposit.

In order to obtain an adequate overpotential in a respective composition, specific "suppressors" are typically utilized. A "suppressor" (also known as "carrier") "is typically a polymeric organic species, e.g., high molecular weight polyethylene or polypropylene glycol, which adsorbs strongly on the copper cathode surface to form a film that sharply increases the overpotential for copper deposition. This prevents uncontrolled copper plating [...]" (see US 2005/0247577 A1, paragraph [0007]). However, unpredictable interactions between suppressors and surfactants may occur and lead to undesired negative results. Furthermore, some well operating suppressors negatively affect the overall wettability of the composition. Thus, the performance of an acidic aqueous composition for electrolytically depositing a copper deposit is hardly predictable if different compounds/compound classes need to work together.

Although a number of well operating suppressors is known, a typical phenomenon is that compositions utilizing such suppressors are typically "fixed" regarding the above mentioned parameters overpotential and surface tension. However, in many cases it is desired to specifically adapt a composition to the specific requirements of a substrate with its specific structures, which are often different in dimensions and aspect ratios. This often demands an additional fine-tuning, in particular in terms of surface tension and/or overpotential. Such a demand-based fine-tuning of the composition can often only achieved by utilizing additional compounds (e.g. additional surfactants and/or suppressor compounds of significantly different chemistry). Very often this creates problems because the result of adding additional compounds is usually not predictable and very often additionally alters parameters that should be maintained. As mentioned above, adding a surfactant might negatively affect the overpotential, which might not be obvious immediately. Thus, a careful and time consuming cross-testing is often required with the result that either a different surfactant must be utilized or additional suppressor compounds in order to correct such a negative effect. Such an intensive cross-testing is usually not desired and very often cannot realized. Furthermore, there is no guarantee that finally a composition is obtained, which fulfils the needed requirements. And, even if such a composition is obtained, the composition often is too complex to be reliably maintained and supervised over its life time. Thus, a demand-based fine-tuning is often omitted from a practical point of view.

Many compositions for copper deposition comprising a large variety of compounds are known in the art. For example, JP 2004-137530 A relates to a compound alloy metal ball as connector of electrical/electronic circuit components. The metal ball surfaces are provided with electroplating silver-copper alloy film layers. JP'530 discloses a respective plating bath comprising a quinoline compound. However, JP'530 is silent with respect to a fine-tuning.

JP 2000-026994 A relates to electric-electronic circuit parts comprising a lead-free tin-copper alloy plating film. JP'994 discloses a respective plating bath comprising a quinoline compound. However, JP'530 is silent with respect to a fine-tuning.

### Objective of the present Invention

Therefore, there is an ongoing demand for a "fine tuning" of an acidic aqueous composition for electrolytically depositing a copper deposit. It was therefore the objective of the present invention to provide a composition for electrolytically depositing a copper deposit, which exhibits good deposition qualities (i.e. free of voids) and can be fined-tuned to fulfill specific surface tension and/or overpotential demands without accumulating a high number of different compound classes in the composition in order to achieve said demands.

It was furthermore an objective of the present invention to provide a respective method for electrolytically depositing said copper deposit onto a substrate.

### Summary of the Invention

The objectives mentioned above are solved by an acidic aqueous composition for electrolytically depositing a copper deposit, the composition comprising
(i) copper (II) ions,
(ii) one or more than one compound of formula (Ia) 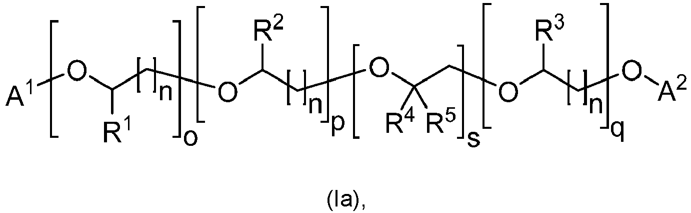 wherein each independently
   - R⁴ and R⁵ are selected from the group consisting of hydrogen, methyl, ethyl, linear C3 to C5 alkyl, branched C3 to C5 alkyl and a moiety of formula (Ib) 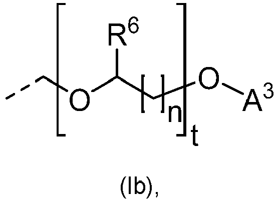
   - R¹, R², R³, and R⁶ are selected from the group consisting of hydrogen, methyl and ethyl,
   - A¹, A² and A³ are selected from the group consisting of hydrogen, methyl, ethyl, linear C3 to C12 alkyl, branched C3 to C12 alkyl, unsubstituted quinoline, substituted quinoline, unsubstituted isoquinoline, and substituted isoquinoline, wherein
      said substituted quinoline and substituted isoquinoline are independently substituted with one, two, three or more than three substituents, each substituent being independently selected from the group consisting of halogen, alkyl, nitro, sulfonate, and alkoxy,
   - s is 0 or 1,
   - n is 1, 2 or 3,
   - o, p, q, and t are integers in the range from 0 to 100,
   with the proviso that
   - at least one of A¹, A² and A³ is independently one of said substituted quinoline or said substituted isoquinoline, and
   - independently o + p + q + t = 5 to 100,
(iii) one, two, three or more than three further compounds, which are different from the compound of formula (Ia), and
wherein the composition does not contain tin ions.

Furthermore, the objectives are solved by a method for electrolytically depositing a copper deposit onto a substrate, the method comprising the steps
(a) providing the substrate,
(b) providing an aqueous composition according to the present invention,
(c) contacting the substrate with the aqueous composition and supplying an electrical current such that copper is electrolytically deposited onto the substrate to obtain the copper deposit.

### Detailed Description of the Invention

The acidic aqueous composition according to the present invention is suitable for electrolytically depositing a copper deposit, in particular for filling structures such as trenches, blind micro vias, and through holes. Thus, the method of the present invention is suitable in the manufacture of printed circuit boards (PCB), integrated circuit (IC) substrates and the like as well as for metallization of semiconducting and glass substrates. The obtained copper deposit in said structures is free of voids.

In particular, compounds of formula (Ia) are useful in fine-tuning the composition's surface tension and/or overpotential, in order to obtain a demand-based composition. Thereby, the number of different compound classes is comparatively low, usually without the need of common surfactants.

The acidic aqueous composition according to the present invention is an aqueous composition, which means that water is the primary component. Thus, more than 50 wt.-% of the composition is water, based on the total weight of the aqueous composition, preferably at least 70 wt.-%, even more preferably at least 90 wt.-%, most preferably 95 wt.-% or more. In a few cases it is preferred that the composition comprises one or more than one solvent (other than water) that are miscible with water. Preferred solvents are alcohols that are miscible with water. However, for ecological reasons, water as the sole solvent is preferred, and, thus, most preferably the composition of the present invention does not contain organic solvents at all. Furthermore, the composition is preferably a homogeneous aqueous solution and thus preferably does not contain any particles.

The acidic aqueous composition according to the present invention is typically prepared by dissolving all components and compounds, respectively.

The composition according to the present invention is acidic. Thus, the composition contains one or more than one acid, preferably selected from the group consisting of hydrochloric acid, sulfuric acid, fluoroboric acid, phosphoric acid and methane sulfonic acid. The total concentration of the one or more than one acid in the composition is preferably in the range from 0.01 g/L to 400 g/L, based on the total volume of the composition, more preferably in the range from 1 g/L to 380 g/L, even more preferably in the range from 5 g/L to 350 g/L, most preferably in the range from 8 g/L to 300 g/L. If the total concentration is significantly above 400 g/L an insufficient bottom-up fill performance is observed in structures such as e.g. trenches. Such acids are preferably counted among the one, two, three or more than three further compounds.

In particular preferred is a composition of the present invention, wherein the composition comprises sulfuric acid. Preferably, the total concentration of sulfuric acid in the composition of the present invention is in the range from 5 g/L to 350 g/L, based on the total volume of the acidic aqueous composition, preferably in the range from 8 g/L to 220 g/L. More preferred is a total concentration in the range from 8 g/L to 90 g/L or 180 g/L to 220 g/L. In some cases it is preferred that said sulfuric acid is replaced partially or completely by fluoroboric acid, methane sulfonic acid or other acids.

Preferred is a composition of the present invention, wherein the pH of the composition is 3 or less, preferably 2 or less, even more preferably 1.5 or less, most preferably 1 or less. In the context of the present invention, the pH is determined at a temperature of 20°C, i.e. the defined pH is referenced to 20°C. Thus, only for the sake of pH determination the composition has a temperature of 20°C. This does not mean that the composition of the present invention in itself is limited to the specific temperature of 20°C. For preferred temperatures of the composition see below.

If the pH is significantly above 3 a mostly insufficient conductivity is observed, leading to an unbalanced current density in the composition while the composition is utilized in a deposition process. A pH of 3 or below prevents the formation of insoluble copper oxide. As a result, no complexing agents are preferably utilized in the composition of the present invention. Thus, preferred is an acidic aqueous composition according to the present invention being substantially free of (preferably does not contain) complexing agents. The absence of complexing agents is preferred because the risk to include organic additives into the copper deposit is further minimized. In the absence of significant amounts of complexing agents, the copper deposit typically does not contain a significant carbon content. Preferably, the copper deposit comprises at least 99 wt.-% copper, based on the total weight of the copper deposit, more preferably at least 99.9 wt.-% copper.

In the context of the present invention, the term "substantially free of" a certain subject-matter (e.g. a compound, a metal ion, etc.) denotes that said subject-matter is not present at all or is present only in (to) a very little and undisturbing amount (extent) without affecting the intended purpose of the invention. For example, such a subject-matter might be added or utilized unintentionally, e.g. as unavoidable impurity. "Substantially free of" preferably denotes 0 (zero) ppm to 50 ppm, based on the total weight of the composition of the present invention, if defined for said composition, or based on the total weight of the copper deposit obtained by means of the present invention, if defined for said copper deposit; preferably 0 ppm to 25 ppm, more preferably 0 ppm to 10 ppm, even more preferably 0 ppm to 5 ppm, most preferably 0 ppm to 1 ppm.

The acidic aqueous composition of the present invention comprises copper (II) ions. Preferably, the copper ion source is selected from the group consisting of copper sulfate, copper chloride, copper nitrate, copper fluoroborate, copper acetate, copper citrate, copper phenyl sulfonate, copper para-toluene sulfonate, and copper alkyl sulfonates. A preferred copper alkyl sulfonate is copper methane sulfonate. The most preferred copper source is copper sulfate, most preferably CuSO₄ * 5 H₂O.

In general, in the composition according to the present invention the total concentration of copper (II) ions is preferably in the range from 3 g/L to 70 g/L, based on the total volume of the composition, more preferably in the range from 5 g/L to 70 g/L.

More specifically, the total concentration of copper sulfate (most preferably CuSO₄ * 5 H₂O) in the acidic aqueous composition of the present invention is preferably in the range from 20 g/L to 250 g/L, based on the total volume of the acidic aqueous composition, more preferably in the range from 30 g/L to 220 g/L. In some specific cases a total concentration in the range from 30 g/L to 80 g/L is preferred, wherein in other specific cases a total concentration in the range from 180 g/L to 220 g/L is preferred.

Preferred is a composition of the present invention, wherein said copper (II) ions in the composition represent at least 95 mol-% of all depositable metal cations in the composition, more preferably at least 98 mol-%, even more preferably at least 99 mol-%, most preferably at least 99.9 mol-%. "Depositable metal cations" are cations that are deposited in metallic form, including copper, if an electric current is applied, for example as defined in the method of the present invention (see below). Such a "depositable metal cation" is for example tin, nickel and silver, typically forming a copper alloy. Metal cations that are not "depositable" are for example sodium and potassium cations. Such metal cations (and related ones) do not contribute to the above mentioned definition.

Preferred is a composition of the present invention, wherein the total amount of said copper (II) ions in the composition represents 80 wt.-% to 100 wt.-% of all transition metal cations in the composition, based on the total weight of all transition metal cations in the composition, preferably at least 90 wt.-%, more preferably at least 95 wt.-%, even more preferably at least 99 wt.-%, most preferably at least 99.5 wt.-%.

More preferred is a composition of the present invention, wherein said copper (II) ions in the composition represent at least 95 mol-% of all transition metal cations together with metals of main groups III, IV, and V of the periodic table in the composition, more preferably at least 98 mol-%, even more preferably at least 99 mol-%, most preferably at least 99.9 mol-%.

More preferably, the acidic aqueous composition of the present invention is not for a copper alloy deposit.

Most preferred is a composition of the present invention, wherein said copper (II) ions are the only depositable metal cations. Thus, the copper deposit obtained by means of the present invention is most preferably pure copper. In the context of the present invention, "pure copper" denotes that the copper deposit comprises at least 99.5 weight-% copper, based on the total weight of the copper deposit.

Preferred is a composition of the present invention, wherein the composition does not contain lead ions and aluminium ions, preferably does not contain any metal ions of main groups III (boron group), IV (carbon group), and V (nitrogen group) on the periodic table.

Preferred is a composition of the present invention, wherein the composition does not contain silver ions, preferably does not contain any transition metal ions except iron ions and said copper (II) ions. In a few cases it is preferred that the composition is substantially free of or does not contain iron ions. However, in a number of cases it is preferred that the composition contains iron ions, for example if insoluble anodes are utilized (for further information see text below).

The acidic aqueous composition of the present invention comprises one or more than one compound of formula (Ia). In some cases it is preferred that the composition comprises only one compound of formula (Ia). However, in other cases it is preferred that the composition comprises at least two compounds of formula (Ia). In each case, a fine-tuning of the surface tension and/or the overpotential can be achieved by either appropriately selecting a compound of formula (Ia) (see Examples) or by combining at least two compounds of formula (Ia). In each case, the compound of formula (Ia) serves as effective suppressor in the composition of the present invention.

Throughout the text the term "independently" denotes that the selection for e.g. a group or moiety in a first compound does not depend on the selection for other groups or moieties in the same compound, and furthermore, does not depend on the selection for the same group or moiety in a second compound, if a first and second compound is present (or even a third, etc. compound). This likewise applies to said proviso.

In the compound of formula (Ia) a moiety with variable "s" is present. If s is zero, the compound of formula (Ia) does not comprise this moiety, including that neither R⁴ nor R⁵ are present. This also means that the compound of formula (Ia) does not comprise a moiety of Formula (Ib). In such a case, variable t in the moiety of formula (Ib) is counted zero.

Throughout the text the term "alkyl" is used and refers to an univalent group derived from alkanes by removal of a hydrogen atom from any carbon atom (C*ₙ*H_{2*n*+1}). The term e.g. "C3 to C12 alkyl" refers to an alkyl group with 3 to 12 carbon atoms (n = 3 to 12). Throughout the text C3 alkyl explicitly includes n-propyl and iso-propyl, C4 alkyl explicitly includes n-butyl, iso-butyl, sec-butyl, tert-butyl and C5 alkyl explicitly includes 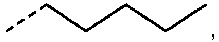 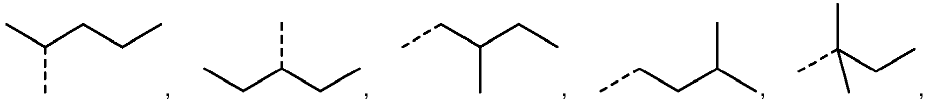 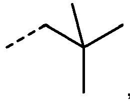 and 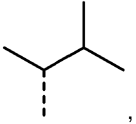 wherein the dashed line represents the covalent bond for binding the respective carbon atom of the alkyl radical to a respective atom in the compound of formula (Ia) (connecting bond). The same principle basically applies to the dashed line in the moiety of formula (Ib).

In the composition of the present invention A¹, A² and A³ are each independently selected from the group consisting of hydrogen, methyl, ethyl, linear C3 to C12 alkyl, branched C3 to C12 alkyl, unsubstituted quinoline, substituted quinoline, unsubstituted isoquinoline, and substituted isoquinoline (with substituents as defined throughout the text). However, the proviso defined throughout the present text must be fulfilled, namely that in the compound of formula (Ia), at least one of A¹, A² and A³ is independently such a substituted quinoline or substituted isoquinoline and that independently o + p + q + t = 5 to 100. This means that in each compound of formula (Ia) at least one of A¹, A² and A³ must be such a substituted quinoline or substituted isoquinoline, preferably such a substituted quinoline. For example, the composition of the present invention may contain a first and a second compound of formula (Ia). In the first compound A¹ is quinoline substituted with a single halogen substituent, A² and A³ are unsubstituted quinolines, o + p + q + t = 22. In the second compound A¹ is quinoline substituted with a two alkyl substituents, A² and A³ are unsubstituted quinolines, o + p + q + t = 35. In such a case the above defined proviso is fulfilled for each compound of formula (Ia). Furthermore, A¹ in the first compound is independent of A¹ in the second compound, which likewise applies to the sum of o + p + q + t.

Preferred is a composition of the present invention, wherein in formula (Ia)
- A¹, A² and A³ are selected from the group consisting of hydrogen, methyl, ethyl, linear C3 to C8 alkyl, branched C3 to C8 alkyl, unsubstituted quinoline, substituted quinoline, unsubstituted isoquinoline, and substituted isoquinoline, preferably
- A¹, A² and A³ are selected from the group consisting of methyl, ethyl, linear C3 to C5 alkyl, branched C3 to C5 alkyl, unsubstituted quinoline, substituted quinoline, unsubstituted isoquinoline, and substituted isoquinoline, more preferably
- A¹, A² and A³ are selected from the group consisting of methyl, ethyl, unsubstituted quinoline, substituted quinoline, unsubstituted isoquinoline, and substituted isoquinoline, most preferably
- A¹, A² and A³ are selected from the group consisting of methyl, ethyl, unsubstituted quinoline, and substituted quinoline.

For preferred C3, C4, and C5 alkyl see the text above.

Generally, the ring numbering in quinoline is 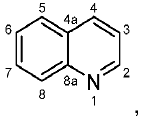 in isoquinoline

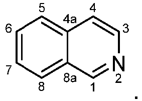

Preferably, the substituted quinoline (as well as the unsubstituted quinoline, the substituted isoquinoline, and the unsubstituted isoquinoline) is connected via carbon atom 8 to the rest of the compound of formula (Ia) and (Ib), respectively. This furthermore means that carbon atom 8 is preferably not substituted with one of said substituents in case of a substituted quinoline or substituted isoquinoline. Generally, the rest of compound of formula (Ia) and (Ib), respectively, is not considered as a substituent in the context of the present invention.

In the present invention, the (substituted) quinoline and the (substituted) isoquinoline is not connected by means of their nitrogen atom with the rest of the compound of formula (Ia) and formula (Ib), respectively.

In the context of the present invention, "substituted" in connection with quinoline and isoquinoline denotes that independently one, two, three or more than three hydrogen atoms of the quinoline- and isoquinoline carbon ring atoms (except carbon atoms 4a and 8a), respectively, are substituted, each substituent being independently selected from the group consisting of halogen, alkyl, nitro, sulfonate, and alkoxy. Thus, in the present invention compounds of formula (Ia) are not substituted at the ring nitrogen atom of the quinoline and isoquinoline.

Preferred is a method of the present invention, wherein at least one of the one, two, three or more than three substituents is located at carbon atom 5 or 7, preferably at least one substituent is located at carbon atom 5, even more preferably with halogen, most preferably chloride or bromide.

Preferred is a composition of the present invention, wherein each substituent in said substituted quinoline and substituted isoquinoline being independently selected from the group consisting of halogen, alkyl, nitro, and sulfonate, preferably selected from the group consisting of halogen, alkyl, and nitro, most preferably selected from the group consisting of halogen and alkyl.

More preferred is a composition of the present invention, wherein, regarding said substituents, the halogen is independently selected from the group consisting of chloride and bromide, and/or the alkyl is independently selected from the group consisting of methyl and ethyl.

Even more preferred is a composition of the present invention, wherein at least one of said substituents is halogen (among the substituents throughout the text).

Most preferred is a composition of the present invention, wherein at least one of the substituents in at least one of the substituted quinoline or substituted isoquinoline is chloride or bromide, even more preferably bromide. Also most preferred is a composition of the present invention, wherein at least one of the substituents in each of the substituted quinoline and substituted isoquinoline is chloride or bromide, even more preferably bromide.

In the context of the present invention, "sulfonate" denotes a -SO₃⁻ moiety and includes its protonated form, its unprotonated form, and salts thereof. "Nitro" denotes a -NO₂ moiety.

Preferred is a composition of the present invention, wherein in formula (Ia) at least one of A¹, A² and A³ is one of said substituted quinoline, preferably with substituents as defined above, more preferably at least two of A¹, A² and A³ are of said substituted quinoline.

In the acidic aqueous composition according to the present invention R⁴ and R⁵ are independently selected from the group consisting of hydrogen, methyl, ethyl, linear C3 to C5 alkyl, branched C3 to C5 alkyl and a moiety of formula (Ib). For specific moieties of linear C3 to C5 alkyl and branched C3 to C5 alkyl see the text above. Preferably, R⁴ and R⁵ are independently selected from the group consisting of hydrogen, methyl, ethyl, linear C3 alkyl, branched C3 alkyl and a moiety of formula (Ib). For specific moieties of linear C3 alkyl and branched C3 alkyl see the text above.

In many cases a composition of the present invention is preferred, wherein in formula (Ia) at least one of R⁴ and R⁵ is a moiety of formula (Ib). Thus, preferred is a method of the present invention, wherein the compound of formula (la) comprises a A¹ moiety, a A² moiety, and a A³ moiety, preferably as defined throughout the text as being preferred.

Preferred is a composition of the present invention, wherein in formula (Ia) s is 1 and R⁵ is a moiety of formula (Ib), preferably s is 1, R⁴ is hydrogen, and R⁵ is a moiety of formula (Ib), more preferably s is 1, p is 0, R⁴ is hydrogen, and R⁵ is a moiety of formula (Ib).

In the acidic aqueous composition of the present invention A¹, A² and A³ independently comprise (besides other moieties for A¹, A² and A³ as defined throughout the present text) linear C3 to C12 alkyl and branched C3 to C12 alkyl. Preferably, these alkyl moieties are linear C3 to C10 alkyl and branched C3 to C10 alkyl, more preferably linear C3 to C8 alkyl and branched C3 to C8 alkyl, even more preferably linear C3 to C5 alkyl and branched C3 to C5 alkyl. For specific and most preferred linear and branched C3 to C5 alkyl see the text above.

In some cases it is preferred that A¹, A², and A³ is not hydrogen. This means that in such preferred cases the group defined for A¹, A², and A³ does not include hydrogen.

Preferred is a composition of the present invention, wherein the total concentration of the one or more than one compound of formula (la) is at least 5 mg/L, based on the total volume of the acidic aqueous composition, preferably at least 10 mg/L, more preferably at least 100 mg/L, and even more preferably at least 200 mg/L. Preferably, the total concentration is not exceeding 1500 mg/L, based on the total volume of the acidic aqueous composition, preferably not exceeding 1000 mg/L, more preferably not exceeding 700 mg/L, even more preferably not exceeding 500 mg/L and even more preferably not exceeding 250 mg/L.

In the acidic aqueous composition of the present invention the sum of variables o, p, q, and t (o + p + q + t) is in the range from 5 to 100 (o + p + q + t = 5 to 100), wherein o, p, q, and t are each individually integers in the range from 0 to 100. Each integer contributes to said sum if the respective moiety is present in the compound of formula (Ia), otherwise they contribute with zero.

Preferred is a composition of the present invention, wherein o + p + q + t = 6 to 80, preferably 7 to 70, more preferably 8 to 50, even more preferably 10 to 30, most preferably 12 to 22.

Preferred is a composition of the present invention, wherein each of the one or more than one compound of formula (Ia) has a weight average molecular weight M_{W} in the range from 300 g/mol to 3000 g/mol, preferably in the range from 400 g/mol to 2000 g/mol, more preferably in the range from 500 g/mol to 1500 g/mol.

As mentioned above, the acidic aqueous composition of the present invention comprises one, two, three or more than three further compounds, which are different from the compound of formula (Ia). Preferably, the one, two, three or more than three further compounds comprise one or more than one species of ions, one or more than one accelerator-brightener compound, one or more than one carrier-suppressor compound, one or more than one leveller compound, and (in very rare cases) one or more than one wetting agent.

A preferred species of ions is selected from the group consisting of halide ions (preferably chloride ions) and sulfate ions. They may be fully or partly present to the acidic aqueous composition according to the present invention by means of the copper source (for various copper sources see the text above). Other suitable sources for halide ions are for example hydrochloric acid or alkali halides such as sodium chloride. In particular preferred is a composition of the present invention, wherein the one, two, three or more than three further compounds comprise halide ions, preferably chloride ions. Preferred is an acidic aqueous composition of the present invention, wherein the total concentration of chloride ions is in the range from 0.01 g/L to 0.18 g/L, based on the total volume of the acidic aqueous composition, preferably in the range from 0.03 g/L to 0.10 g/L. More preferably, the total concentration of hydrochloric acid in the composition is in the range from 0.01 g/L to 0.18 g/L, based on the total volume of the acidic aqueous composition, preferably in the range from 0.03 g/L to 0.10 g/L.

In some cases it is preferred that the acidic aqueous composition of the present invention comprises a redox couple, more preferably a couple of Fe²⁺/Fe³⁺ ions. Such a redox couple is in particularly useful, if reverse pulse plating is used in combination with insoluble anodes for copper deposition. Suitable processes for copper plating using a redox couple in combination with reverse pulse plating and insoluble anodes are for example disclosed in US 5,976,341 and US 6,099,711. The total concentration of Fe²⁺ ions in the composition is preferably in the range from 8 g/L to 12 g/L and that of Fe³⁺ ions preferably in the range from 1 g/L to 5 g/L, based on the total volume of the composition.

Preferred accelerator-brightener compounds are selected from the group consisting of thiol-, sulfide-, disulfide-, and polysulfide-compounds. More preferred accelerator-brightener compounds are selected from the group consisting of 3-(benzthiazolyl-2-thio)-propylsulfonic-acid, 3-mercaptopropan-1-sulfonic acid, ethylendithiodipropylsulfonic-acid, bis-(p-sulfophenyl)-disulfide, bis-(ω-sulfobutyl)-disulfide, bis-(ω-sulfohydroxypropyl)-disulfide, bis-(ω-sulfopropyl)-disulfide, bis-(ω-sulfopropyl)-sulfide, methyl-(ω-sulfopropyl)-disulfide, methyl-(ω-sulfopropyl)-trisulfide, O-ethyl-dithiocarbonic-acid-S-(ω-sulfopropyl)-ester, thioglycolic acid, thiophosphoric-acid-O-ethyl-bis-(ω-sulfopropyl)-ester, 3-N,N-dimethylaminodithiocarbamoyl-1-propanesulfonic acid, 3,3'-thiobis(1-propanesulfonic acid), thiophosphoric-acid-tris-(ω-sulfopropyl)-ester, and salts thereof. The total concentration of accelerator-brightener compounds in the composition is preferably in the range from 0.01 mg/L to 100 mg/L, based on the total volume of the acidic aqueous composition, more preferably in the range from 0.05 mg/L to 10 mg/L.

Preferred carrier-suppressor compounds are selected from the group consisting of polyvinyl alcohol, carboxymethylcellulose, polyethylene glycol, polypropylene glycol, stearic acid polyglycolester, alkoxylated naphtoles, oleic acid polyglycolester, stearylalcoholpolyglycolether, nonylphenolpolyglycolether, octanolpolyalkylenglycolether, octanediol-bis-(polyalkylenglycolether), poly(ethylenglycol-*ran*-propylenglycol), poly(ethylenglycol)-*block-*poly(propyleneglycol)-*block*-poly(ethylenglycol), and poly(propylenglycol)-*block-*poly(ethylenglycol)-*block*-poly(propylenglycol). More preferably, the carrier-suppressor compound is selected from the group consisting of polyethylene glycol, polypropylene glycol, poly(ethylene glycol-*ran*-propylene glycol), poly(ethylenglycol)-*block*-poly(propyleneglycol)-*block-*poly(ethylenglycol), and poly(propylenglycol)-*block-*poly(ethylenglycol)-*block* poly(propylenglycol). The total concentration of carrier-suppressor compounds in the composition is preferably in the range from 0.005 g/L to 20 g/L, based on the total volume of the acidic aqueous composition, more preferably in the range of from 0.01 g/L to 5 g/L. This total concentration does not include the total amount of compounds of formula (la).

However, most preferred is a composition of the present invention, which is substantially free of (preferably does not contain) a carrier-suppressor compound other than of formula (la), most preferably a carrier-suppressor compound as defined above (i.e. selected from the group as defined above). Own experiments have shown that such typical carrier-suppressor compounds very often negatively interfere with the fine-tuning obtained with compounds of formula (la).

Preferred leveller compounds are selected from the group consisting of nitrogen containing leveller compounds, preferably selected from the group consisting of polyethyleneimine, alkoxylated polyethyleneimine, alkoxylated lactames and polymers thereof, diethylenetriamine, hexamethylenetetramine, Janus Green B, Bismarck Brown Y, Acid Violet 7, phenazine and salts thereof, amino acids additionally containing at least one sulfur atom (preferably cysteine), polyethylenimine bearing peptides, polyethylenimine bearing amino acids, polyvinylalcohol bearing peptides, polyvinylalcohol bearing amino acids, polyalkylenglycol bearing peptides, polyalkylenglycol bearing amino acids, aminoalkylen bearing pyrrols, and aminoalkylen bearing pyridines. The total concentration of leveller compounds in the composition is preferably in the range from 0.1 mg/L to 100 mg/L, based on the total volume of the composition. Own experiments have shown that such leveller compounds very often improve process stability. However, in a few cases some leveller compounds as defined above slightly negatively (but still acceptably) affect the overpotential generated in the acidic aqueous compositions of the present invention. Thus, in some cases it is preferred that the acidic aqueous composition of the present invention is substantially free of (preferably does not contain) one or more than one leveller compound, more preferably one or more than one leveller compound as defined above.

As mentioned above, compounds of formula (Ia) significantly affect the surface tension and/or the overpotential of the composition of the present invention. Therefore, only in very few cases it is preferred that the composition of the present invention comprises in addition to the one or more than one compound of formula (Ia) at least one wetting agent (also called surfactant). If an additional wetting agent is utilized, the at least one wetting agent is preferably selected from the group consisting of non-ionic, cationic, and anionic surfactants. The total amount of said at least one wetting agent in the acidic aqueous composition is preferably in the range from 0.01 wt.-% to 5 wt.-%, based on the total weight of the acidic aqueous composition. However, most preferred is a composition of the present invention, wherein the composition is substantially free of (preferably does not comprise) a wetting agent, which is different from compounds of formula (Ia). Own experiments have shown that compounds of formula (Ia) selectively affect the surface tension and/or the overpotential of the composition of the present invention. Thus, by specifically selecting one or more than one compound of formula (Ia) the desired surface tension and overpotential is obtained, most preferably without utilizing common wetting agents in addition.

Very preferred is a composition of the present invention, wherein the one or more than one compound of formula (Ia) is as follows: 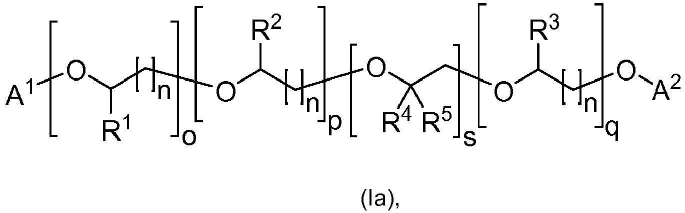 wherein
- s is 1,
- R⁵ is a moiety of formula (Ib) 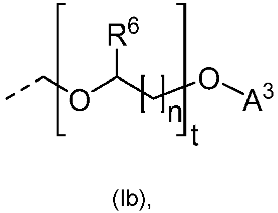
- R⁴ is selected from the group consisting of hydrogen, methyl, and ethyl,
- R¹, R², R³, and R⁶ are independently selected from the group consisting of hydrogen, methyl, and ethyl,
- A¹, A² and A³ are substituted quinoline independently with one, two, three or more than three substituents, each substituent independently selected from the group consisting of halogen, alkyl, nitro, sulfonate, and alkoxy,
- n is independently 1, 2 or 3,
- o, p, q, and t are independently integers in the range from 0 to 100, wherein o + p + q + t = 5 to 100.

The present invention also relates to the use of an acidic aqueous composition of the present invention for electrolytically depositing a copper deposit, preferably for electrolytically depositing a copper deposit, wherein at least 90 weight-% of the copper deposit is copper, based on the total weight of the copper deposit, more preferably at least 95 weight-%, most preferably at least 99.5 weight-%.

The above mentioned features regarding the acidic aqueous composition of the present invention (preferably features defined as being preferred) do also apply to the above mentioned use of the acidic aqueous composition of the present invention.

Furthermore, the present invention relates to the use of one or more than one specific compound of formula (Ia) as defined below in the present text (preferably as defined as being preferred) as surfactant, preferably as surfactant in an acidic aqueous composition, more preferably as surfactant in an acidic aqueous composition with a pH of 3 or less, or as surfactant in a composition of the present invention. More preferred, the present invention relates to the use of one or more than one specific compound of formula (la) as defined below in the present text (preferably as defined as being preferred) as surfactant in an acidic aqueous composition for copper deposition comprising copper (II) ions, more preferably as surfactant in an acidic aqueous composition for copper deposition comprising copper (II) ions and with a pH of 3 or less. Preferably, the above mentioned regarding the total concentration of copper (ii) ions applies likewise to the aforementioned use.

The term "as surfactant" denotes that the specific compounds of formula (Ia) as defined below in the present text alter the surface tension compared to the surface tension of water. Preferred is a use of a compound of formula (Ia) as defined for a composition of the present invention as a surface tension decreasing surfactant, compared to the surface tension of water.

Furthermore, the present invention relates to the use of a compound of formula (Ia) as defined throughout the present text as overpotential modifying compound, preferably as overpotential modifying compound in an acidic aqueous composition, more preferably as overpotential modifying compound in an acidic aqueous composition with a pH of 3 or less, or as overpotential modifying compound in a composition of the present invention. Most preferably as both, surfactant and overpotential modifying compound.

The term "overpotential modifying compound" denotes that compounds of formula (Ia) as defined throughout the present text alter the overpotential of a composition compared to the overpotential of a composition containing one or more than one compound of formula (Ia) but without substituents at the quinoline/isoquinoline moiety (but otherwise being identical).

The above mentioned features regarding the acidic aqueous composition of the present invention (preferably features defined as being preferred), do also apply to the aforementioned use of a compound of formula (Ia) as surfactant and/or overpotential modifying compound.

As mentioned above, the present invention furthermore relates to a method for electrolytically depositing a copper deposit onto a substrate, the method comprising the steps
(a) providing the substrate,
(b) providing an aqueous composition according to the present invention,
(c) contacting the substrate with the aqueous composition and supplying an electrical current such that copper is electrolytically deposited onto the substrate to obtain the copper deposit.

In the method of the present invention the substrate and at least one anode are connected to a current or respective voltage source. Upon supplying a current, copper is deposited onto said substrate. In some cases it is preferred that after step (a) a cleaning and/or rinsing step is included as an additional step. In such a case a cleansed/rinsed substrate is obtained. Preferably, such a cleansed/rinsed substrate is directly contacted as defined in step (c).

Preferred is a method of the present invention, wherein the substrate is selected from the group consisting of printed circuit boards, IC substrates, semiconducting wafers, ceramics and glass substrates. Preferred is a method of the present invention, wherein the substrate (preferably as defined above) comprises one or more than one recessed structure selected from the group consisting of trenches, blind micro vias, and through holes. In the method of the present invention preferably such structures are void-free filled with copper. Thus, preferred is a method of the present invention, wherein in step (c) the electrical current is supplied such that the copper is electrolytically deposited onto the substrate and the one or more than one recessed structure, preferably selected from the group consisting of trenches, blind micro vias, and through holes, are void-free filled with said copper deposit.

In many cases it is preferred that the substrate comprises a metal seed layer, more preferably a copper seed layer.

Preferred is a method of the present invention, wherein during step (c) the acidic aqueous composition of the present invention is agitated. Preferably it is agitated by a strong inflow and, where applicable, by clean air being blown in, such that the surface of the composition undergoes strong movement. This means that the substance transport is maximized in the vicinity of the substrate and anodes so that a greater current density is made possible. Movement of the substrate also improves the substance transport. Constant diffusion-controlled deposition is achieved by increased convection and movement. The substrate can be moved in a horizontal and vertical manner and/or by means of vibration. A combination with the air blown into the composition is particularly effective, and, thus preferred.

Preferred is a method of the present invention, wherein during step (c) the composition has a temperature in the range from 15°C to 50°C, more preferably a temperature in the range from 15°C to 40°C.

During step (c) an electrical current is supplied. Preferred is a method of the present invention, wherein during step (c) a direct current (DC) is supplied, a pulsed current with or without reverse pulses, or combinations thereof. In pulsed currents the current is typically interrupted by pauses and/or supplemented by reverse pulses. Reverse pulses were developed for the electrolytic deposition in particular of copper on circuit boards with structures exhibiting high aspect ratios (compare DE 42 25 961 C2 and DE 27 39 427 A1).

Preferred is a method of the present invention, wherein during step (c) the electrical current has a cathodic current density in the range from 0.05 A/dm² to 12 A/dm², more preferably in the range from 0.1 A/dm² to 7 A/dm², even more preferably in the range from 0.1 A/dm² to 3 A/dm². However, current densities exceeding the above mentioned ranges are not excluded, in particular if a pulsed current is supplied.

During step (c) of the method of the present invention one or more than one anode is utilized. Preferred is a method of the present invention, wherein insoluble or soluble anodes are used during step (c). In some cases insoluble anodes are preferred. Insoluble anodes are inert during the electrolytic deposition and consequently do not change their shape. This allows a time constant geometry of such anodes during step (c). In particular preferred is a method of the present invention, wherein insoluble anodes of precious metals, preferably of platinum or titanium, coated with mixed oxides of precious metals, preferably coated with ruthenium oxide and iridium oxide, are utilized during step (c).

If insoluble anodes are utilized, copper ions need to be supplemented. To achieve this, a copper compound needs to be dissolved in the acidic aqueous composition of the present invention (for copper ion sources see the text above), or metallic copper is brought into contact with the composition. Metallic copper dissolves under the influence of oxygen dissolved in the composition or with the help of a redox couple, preferably a Fe²⁺/Fe³⁺ couple.

In other cases a method of the present invention is preferred, wherein soluble copper anodes are utilized during step (c). In these cases, the copper consumed during step (c) is supplemented electrochemically via dissolving said copper anodes. Soluble copper anodes with a content of 0.02 wt.-% to 0.067 wt.-% phosphorus are in particular preferred.

Preferred is a method of the present invention, wherein during step (c) copper is deposited by immersing the substrate into the composition of the present invention or by a horizontal deposition method. The latter deposition method is preferably carried out in a conventional horizontal apparatus in which the substrate is conveyed in a horizontal position and direction of transport, at the same time being brought into contact with the composition of the present invention. The anodes are also disposed in a horizontal position in the apparatus along the transport path for the substrate. Such a horizontal apparatus is disclosed for example in DE 36 24 481 A1 and DE 32 36 545 A1.

The above mentioned features regarding the acidic aqueous composition of the present invention (preferably features defined as being preferred) preferably do also apply to the method of the present invention.

Furthermore, the present invention relates to a specific compound of formula (Ia) 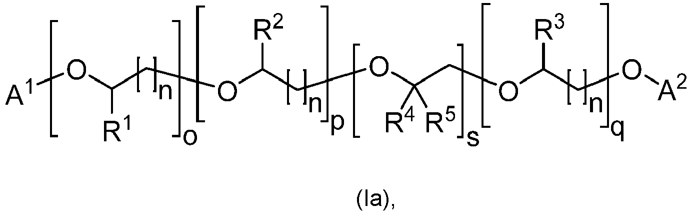 wherein each independently
- R⁴ and R⁵ are selected from the group consisting of hydrogen, methyl, ethyl, linear C3 to C5 alkyl, branched C3 to C5 alkyl and a moiety of formula (Ib) 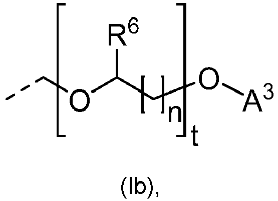
- R¹, R², R³, and R⁶ are selected from the group consisting of hydrogen, methyl and ethyl,
- A¹, A² and A³ are selected from the group consisting of hydrogen, methyl, ethyl, linear C3 to C12 alkyl, branched C3 to C12 alkyl, unsubstituted quinoline, substituted quinoline, unsubstituted isoquinoline, and substituted isoquinoline,
   wherein
   said substituted quinoline and substituted isoquinoline are independently substituted with one, two, three or more than three substituents, each substituent being independently selected from the group consisting of halogen, nitro, sulfonate, and alkoxy,
- s is 0 or 1,
- n is 1, 2 or 3,
- o, p, q, and t are integers in the range from 0 to 100,
   with the proviso that
- at least one of A¹, A² and A³ is one of said substituted quinoline or said substituted isoquinoline, and
- o + p + q + t = 5 to 100.

Own experiments show that such compounds provide very acceptable plating results in the method of the present invention and furthermore allow a fine-tuning of the composition of the present invention (see Examples). The above mentioned features regarding the acidic aqueous composition of the present invention (preferably features defined as being preferred) preferably and in particular do also apply to the aforementioned compound of formula (Ia).

Furthermore, the present invention relates to a specific compound of formula (Ia), 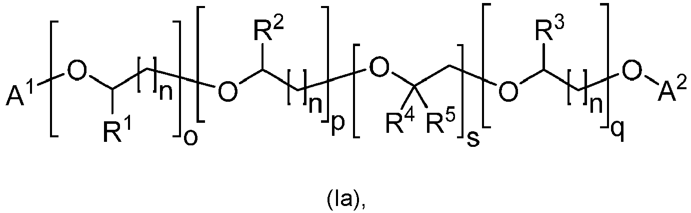 wherein
- s is 1,
- R⁵ is a moiety of formula (Ib) 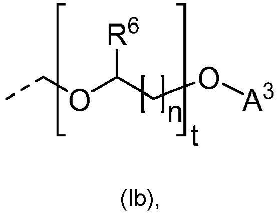
- R⁴ is selected from the group consisting of hydrogen, methyl, and ethyl,
- R¹, R², R³, and R⁶ are selected from the group consisting of hydrogen, methyl and ethyl,
- A¹, A² and A³ are independently substituted quinoline independently with one, two, three or more than three substituents, each substituent independently selected from the group consisting of halogen, alkyl, nitro, sulfonate, and alkoxy,
- n is 1, 2 or 3,
- o, p, q, and t are integers in the range from 0 to 100,
   with the proviso that
- o + p + q + t = 5 to 100.

This means that preferred is a compound of formula (Ia) 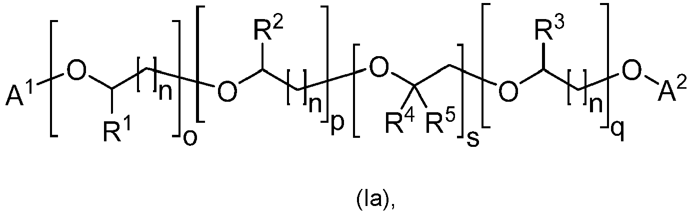 wherein
- s is 1,
- R⁵ is a moiety of formula (Ib) 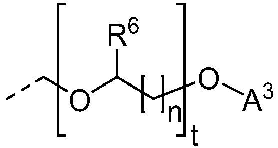 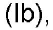
- R⁴ is selected from the group consisting of hydrogen, methyl, and ethyl,
- R¹, R², R³, and R⁶ are independently selected from the group consisting of hydrogen, methyl, and ethyl,
- A¹, A² and A³ are substituted quinoline independently with one, two, three or more than three substituents, each substituent independently selected from the group consisting of halogen, alkyl, nitro, sulfonate, and alkoxy,
- n is independently 1, 2 or 3,
- o, p, q, and t are independently integers in the range from 0 to 100, wherein o + p + q + t = 5 to 100.

Own experiments show that such most preferred compounds provide excellent plating results in the method of the present invention and furthermore allow a very good fine-tuning of the surface tension and/or overpotential.

Even more preferred is a compound of formula (Ia) (as described above, most preferred as defined as being preferred), wherein each substituent is independently selected from the group consisting of halogen, alkyl, nitro, sulfonate, and alkoxy, with the proviso that one, two or more than two substituents are halogen, preferably independently chloride or bromide. Such compounds excellently allow to increase the overpotential and at the same time decrease the surface tension in a respective composition (see Examples below).

The above mentioned features regarding the acidic aqueous composition of the present invention (preferably features defined as being preferred) preferably and in particular do also apply to the aforementioned most preferred compound of formula (Ia).

The present invention is described in more detail by the following non limiting examples.

### Examples

### A. Synthesis of compounds of formula (Ia):

In a first step, one, two, or more than two CAP compounds (abbreviated as "CAP-A", "CAP-B", etc.) are dissolved under nitrogen atmosphere in dry THF (6 ml THF per one mmol CAP compound). Afterwards, an amount of NaH (95%), which is equivalent to the total molar amount of CAP compounds, is slowly added while stirring. The stirring is continued for 2 hours. As a result, a first solution is obtained at the end of step one.

In a second step a chain compound (abbreviated as "CC") dissolved in dry THF (20 ml THF per one mmol chain compound) is added over a period of 40 minutes to the first solution obtained in the first step. Stirring is continued for 48 hours under nitrogen atmosphere at 65°C. As a result, a second solution is obtained. Each chain compound is synthesized by reacting a respective base-polymer (compare Table 1 below) with toluene sulfonyl chloride and triethylamine in dichloromethane. All base polymers were purchased at Aldrich.

In a third step the solvent THF in the second solution is removed using a rotary evaporator. As a result, a solvent-free, crude product is obtained.

In a fourth step the solvent-free, crude product is purified by column chromatography (eluent: THF/hexane, volume ratio: 50:50) to obtain a purified product, which is further investigated by NMR and MALDI-TOF-MS measurements.

For each specific compound of formula (Ia), Table 1 summarizes the CAP compound(s), the chain compound and the respective molar amounts in reaction equivalents (abbreviated as "req"). A reaction equivalent (req) denotes that for each reactive group in the chain compound (e.g. a tosylate group) an at least equivalent molar amount of CAP compound is provided such that the reactive group(s) react(s) with the cap compound(s) quantitatively.

**Table 1**

| | | | CAP compound(s) | | | |
|---|---|---|---|---|---|---|
| Nr.* | CC | req | CAP-A | req | CAP-B | req |

| **Reference compounds** | | | | | | |
|---|---|---|---|---|---|---|
| (x-1) | A | 1 | 8-hydroxyquinoline | 3 | -- | -- |
| (x-2) | B | 1 | 8-hydroxyquinoline | 1 | -- | -- |

| **Compounds utilized in the present invention** | | | | | | |
|---|---|---|---|---|---|---|
| (a) | A | 1 | 8-hydroxy-2-methylquinoline | 3 | -- | -- |
| (b) | A | 1 | 8-hydroxy-5,7-dimethylquinoline | 3 | -- | -- |
| (c) | A | 1 | 5-Chloro-8-hydroxyquinoline | 3 | -- | -- |
| (d) | A | 1 | 5,7-Dichloro-8-hydroxyquinoline | 3 | -- | -- |
| (e) | A | 1 | 5,7-Dibromo-8-hydroxyquinoline | 3 | -- | -- |
| (f) | A | 1 | 8-Hydroxy-5-nitroquinoline | 3 | -- | -- |
| (g) | A | 1 | 5,7-Dichloro-8-hydroxy-2-methylquinoline | 3 | -- | -- |
| (h) | A | 1 | 8-Hydroxyquinoline-5-sulfonic acid | 2 | 8-hydroxyquinoline | 1 |
| (i) | C | 1 | 5,7-Dichloro-8-hydroxyquinoline | 2 | -- | -- |
| (j) | C | 1 | 8-hydroxy-2-methylquinoline | 2 | -- | -- |

| | | | | | | |
|---|---|---|---|---|---|---|
| * compound label | | | | | | |

In Table 1, letters refer to the following base-polymers:
A tri-tosylated glycerine ethoxylate, M_{w}= 1000 g/mol
B mono-tosylated mono-methyl-capped polyethylene glycol, M_{w}= 550 g/mol
C di-tosylated poly(ethylene glycol)-b-poly(propylethene glycol)-b-poly(ethylene glycol) block copolymer, M_{w}= 1000 g/mol

### B. Compositions comprising a compound of formula (Ia):

Specific compositions comprising compounds as defined in Table 1 are prepared. Each composition is an acidic aqueous composition comprising the following aqueous base composition:
- 5 g/L copper (II) ions (added as copper sulfate),
- 10 g/L sulfuric acid, and
- 0.05 g/L chloride ions (added as hydrochloric acid).

In each specific composition the following compounds are additionally added to said base composition:
- 100 mg/L to 500 mg/L of a compound according to Table 1 (see "Nr."),
- 20 mg/L to 70 mg/L Atomplate® accelerator (product of Atotech Deutschland GmbH), and
- optionally 1 mg/L to 10 mg/L Atomplate® leveler (product of Atotech Deutschland GmbH) for utilization in plating experiments (data not shown).

Each specific composition is labeled according to the compound label given in Table 1. Table 2 summarizes the individual compositions with its respective compounds according to Table 1 as well as the surface tension (ST) and the total potential shift (OP).

**Table 2**

| Nr.** | Nr.* | ST [mN/m] | OP [mV] |
|---|---|---|---|
| Reference compositions | | | |
| (X-0) | -- | 71 | -- |
| (X-1) | (x-1) | 67 | -488 |
| (X-2) | (x-2) | 67 | -320 |

| Compositions of the present invention | | | |
|---|---|---|---|
| (A) | (a) | 67 | -479 |
| (B) | (b) | 67 | -431 |
| (C) | (c) | 66 | -510 |
| (D) | (d) | 59 | -423 |
| (E) | (e) | 60 | -498 |
| (F) | (f) | 65 | -343 |
| (G) | (g) | 63 | -446 |
| (H) | (h) | 68 | -370 |
| (I) | (i) | 49 | -340 |
| (J) | (j) | 53 | -345 |

| | | | |
|---|---|---|---|
| * compound label ** composition label "ST [mN/m]" denotes surface tension in mN/m "OP [mV]" denotes overpotential and is the total (maximum) potential shift in mV | | | |

Composition (X-0) denotes the aqueous base composition as defined above (i.e. without any additional compound). Its surface tension is 71 mN/m. The surface tension of pure DI water is also approximately 71 mN/m.

The pH of each composition is significantly below 3, typically even below 2.

### C. Determination of the surface tension (ST):

The surface tension of each composition (see Table 2, column "ST") is determined by pendant drop method (Drop Shape Analyser: Kruss DSA100) in ambient air and is carried out as follows. Each compound as defined in Table 1 (see compound label "Nr.") is dissolved in above mentioned base composition (final concentration 200 ppm, based on weight). Prior to each measurement, the Analyser is calibrated to the surface tension value of Dl water, which is approximately 71 mN/m (reference temperature 20°C). Typically, a drop volume of 20 µl is utilized for analysis in default measurement MT mode.

Although in each composition copper (II) ions are present, surface tension appears independent from the presence of copper ions. The surface tension of Dl water is almost identical to the surface tension of the aqueous base composition and, therefore, surface tension is not significantly affected by the presence of copper ions.

### D. Determination of the overpotential:

Overpotential data are generated by means of injection experiments with a platinum rotating disc electrode (Pt RDE); reference electrode being Ag/AgCl. A pre-plating is carried out with the aqueous base composition defined above under item B to obtain a Pt-Cu electrode. Afterwards, the injection experiment is started at starting point t₀. The starting potential is set to zero base line and potential changes are determined continually during the injection experiment. At the starting point t₀ the Pt-Cu electrode is plated at 10 mA/cm² and 1000 RPM rotating speed for 250 seconds to reach first injection point t₂₅₀. At first injection point t₂₅₀ the respective compound to be tested is injected to the base composition. After another 250 seconds the second injection point t₅₀₀ is reached at which the accelerator compound is injected. Afterwards, plating is continued for another 1000 seconds and end point t₁₅₀₀ is reached. Furthermore, 60 seconds following the accelerator injection (t₅₆₀) a primary recovery value (PRV) is determined, wherein at the endpoint t₁₅₀₀ a secondary recovery (SRV) value is determined (both not shown).

In Table 2 the total potential shift in mV is shown in column "OP", referenced to equilibrium base line of zero mV maintained between t₀ and t₂₅₀. The OP-value in Table 2 corresponds to the maximum potential shift obtained before the accelerator compound is injected.

### E. Experimental results:

Generally, compositions comprising quinoline- or isoquinoline-based compounds more or less provide decent copper deposition results, in particular compositions of the present invention (data not shown). Such compositions usually provide a reasonable decrease in surface tension compared to water and/or an adequate overpotential compared to common suppressor compounds (e.g. unaltered PEGs or other common suppressors, which usually do not provide a satisfying total potential shift).

As shown in Table 2, reference composition (X-1) comprising reference compound (x-1) typically provides decent results in terms of surface tension (67 mN/m) and total potential shift (-488 mV). In a number of cases it is sufficient to obtain such parameters including a decreased surface tension from approximately 71 mN/m to approximately 67 mN/m. However, it is challenging to fine-tune this composition without adding additional compounds of significant different structure.

Furthermore, Table 2 shows that the total potential shift of reference composition (X-2) already significantly differs (-320 mV) from the total potential shift obtained in reference composition (X-1). This is the lowest (weakest) total potential shift among the values in Table 2. However, fine-tuning is possible by utilizing minor structural modifications as emphasized in Table 2.

Such a fine-tuning can be achieved with the compositions of the present invention, namely by utilizing substituted quinoline/isoquinoline-based compounds instead of reference compound (x-1). For example, compositions (A) and (B) provide an identical surface tension of 67 mN/m but allow a slightly altered total potential shift of -479 mV and -431 mV, respectively. In this case the substituted quinoline is substituted with one or two methyl substituents.

Composition (C) shows an even stronger total potential shift of -510 mV; however, the surface tension is not significantly altered and remains at 66 mN/m, which is still very similar to reference composition (X-1).

Different to that, compositions (D) and (E) show a significantly decreased surface tension of 59 mN/m and 60 mN/m, respectively, while the total potential shift is slightly stronger in case of composition (E) (-498 mV) or is slightly weaker in case of composition (D) (-423 mV). In this case the substituted quinoline is substituted with one or two halogen substituents, preferably selected from chloride and bromide.

Composition (E) is a very preferred composition because a strong total potential shift (-498 mV) and at the same time a significant decrease of surface tension (60 mN/m) is obtained.

Composition (F) comprises a substituted quinoline which is substituted with a nitro group. The composition shows a significantly weaker total potential shift of -343 mV, while the surface tension is moderately decreased to 65 mN/m.

Composition (G) comprises a substituted quinoline which is substituted with two chloride groups and one methyl group. This composition shows an altogether strong total potential shift of -446 mV, while the surface tension is significantly decreased to 63 mN/m. Also this composition is a preferred composition.

Composition (H) comprises a substituted quinoline which is substituted with a sulfonate group. This composition shows a moderate total potential shift of -370 mV, while the surface tension is 68 mN/m.

Compositions (I) and (J) contain a compound of formula (la), wherein no moiety of formula (lb) is present. These compositions show an altogether moderate total potential shift of approximately -340 mV, while the surface tension is significantly decreased to 49 mN/m and 53 mN/m, respectively. Thus, also such compositions allow a significant fine-tuning.

In each composition according to the present invention, a total potential shift was obtained, which covers a significant range around the value for (X-1).

As a result, the compositions of the present invention allow a fine-tuning in terms of surface tension and/or overpotential. Both parameters are essential in order to obtain an adequately deposited copper deposit in structures such as trenches, vias and through holes. But results can be optimized if a demand-based fine-tuning of a respective composition is achieved. The fine-tuning showed in the present invention (compared to the results of unsubstituted quinoline-based compounds) allows (i) an increased or decreased total potential shift while the surface tension is basically maintained, (ii) a decreased surface tension while the total potential shift is basically maintained, and (iii) a decreased surface tension while the total potential shift is increased. This fine-tuning is based on substituted quinoline/isoquinoline-based compounds, i.e. is based on minor structural modifications of quinoline/isoquinolin-based suppressor compounds. The effects of these minor structural modifications are not predictable in terms of surface tension and overpotential, however, utilization of additional and more different compounds for fine-tuning is successfully avoided. Since the variety of base polymers is limited, utilization of differently substituted quinoline-based suppressor compounds and isoquinoline-based suppressor compounds, respectively, allows a greater variety of fine tuning.

## Claims

1. An acidic aqueous composition for electrolytically depositing a copper deposit, the composition comprising
(i) copper (II) ions,
(ii) one or more than one compound of formula (Ia) 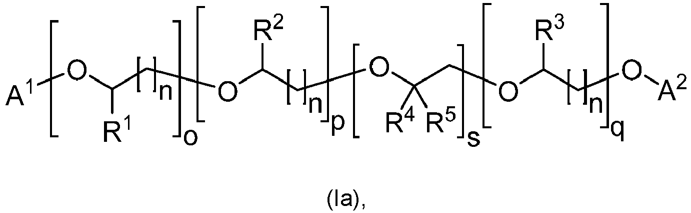 wherein each independently
- R⁴ and R⁵ are selected from the group consisting of hydrogen, methyl, ethyl, linear C3 to C5 alkyl, branched C3 to C5 alkyl and a moiety of formula (lb) 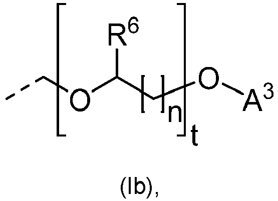
- R¹, R², R³, and R⁶ are selected from the group consisting of hydrogen, methyl and ethyl,
- A¹, A² and A³ are selected from the group consisting of hydrogen, methyl, ethyl, linear C3 to C12 alkyl, branched C3 to C12 alkyl, unsubstituted quinoline, substituted quinoline, unsubstituted isoquinoline, and substituted isoquinoline,
wherein
said substituted quinoline and substituted isoquinoline are independently substituted with one, two, three or more than three substituents, each substituent being independently selected from the group consisting of halogen, alkyl, nitro, sulfonate, and alkoxy,
- s is 0 or 1,
- n is 1, 2 or 3,
- o, p, q, and t are integers in the range from 0 to 100,
with the proviso that
- at least one of A¹, A² and A³ is independently one of said substituted quinoline or said substituted isoquinoline, and
- independently o + p + q + t = 5 to 100,
(iii) one, two, three or more than three further compounds, which are different from the compound of formula (la), and
wherein the composition does not contain tin ions.

2. The composition of claim 1, wherein the pH of the composition is 3 or less, preferably 2 or less, even more preferably 1.5 or less, most preferably 1 or less.

3. The composition of claim 1 or 2, wherein the total amount of said copper (II) ions in the composition represents 80 wt.-% to 100 wt.-% of all transition metal cations in the composition, based on the total weight of all transition metal cations in the composition, preferably at least 90 wt.-%, more preferably at least 95 wt.-%, even more preferably at least 99 wt.-%, most preferably at least 99.5 wt.-%.

4. The composition of any of the aforementioned claims, wherein the composition does not contain lead ions and aluminium ions, preferably does not contain any metal ions of main groups III, IV, and V on the periodic table.

5. The composition of any of the aforementioned claims, wherein the composition does not contain silver ions, preferably does not contain any transition metal ions except iron ions and said copper (II) ions.

6. The composition of any of the aforementioned claims, wherein in formula (Ia) s is 1 and R⁵ is a moiety of formula (Ib), preferably s is 1, R⁴ is hydrogen, and R⁵ is a moiety of formula (Ib), more preferably s is 1, p is 0, R⁴ is hydrogen, and R⁵ is a moiety of formula (Ib).

7. The composition of any of the aforementioned claims, wherein in formula (Ia)
- A¹, A² and A³ are selected from the group consisting of hydrogen, methyl, ethyl, linear C3 to C8 alkyl, branched C3 to C8 alkyl, unsubstituted quinoline, substituted quinoline, unsubstituted isoquinoline, and substituted isoquinoline, preferably
- A¹, A² and A³ are selected from the group consisting of methyl, ethyl, linear C3 to C5 alkyl, branched C3 to C5 alkyl, unsubstituted quinoline, substituted quinoline, unsubstituted isoquinoline, and substituted isoquinoline, more preferably
- A¹, A² and A³ are selected from the group consisting of methyl, ethyl, unsubstituted quinoline, substituted quinoline, unsubstituted isoquinoline, and substituted isoquinoline, most preferably
- A¹, A² and A³ are selected from the group consisting of methyl, ethyl, unsubstituted quinoline, and substituted quinoline.

8. The composition of any of the aforementioned claims, wherein each substituent in said substituted quinoline and substituted isoquinoline being independently selected from the group consisting of halogen, alkyl, nitro, and sulfonate, preferably selected from the group consisting of halogen, alkyl, and nitro, most preferably selected from the group consisting of halogen and alkyl.

9. The composition of any of the aforementioned claims, wherein in formula (Ia) at least one of A¹, A² and A³ is one of said substituted quinoline, preferably at least two of A¹, A² and A³ are of said substituted quinoline.

10. The composition of any of the aforementioned claims, wherein o + p + q + t = 6 to 80, preferably 7 to 70, more preferably 8 to 50, even more preferably 10 to 30, most preferably 12 to 22.

11. Use of an acidic aqueous composition according to any of claims 1 to 10 for electrolytically depositing a copper deposit,
preferably for electrolytically depositing a copper deposit, wherein at least 90 weight-% of the copper deposit is copper, based on the total weight of the copper deposit, more preferably at least 95 weight-%, most preferably at least 99.5 weight-%.

12. A method for electrolytically depositing a copper deposit onto a substrate, the method comprising the steps
(a) providing the substrate,
(b) providing an aqueous composition according to any of claims 1 to 10,
(c) contacting the substrate with the aqueous composition and supplying an electrical current such that copper is electrolytically deposited onto the substrate to obtain the copper deposit.

13. Compound of formula (la) 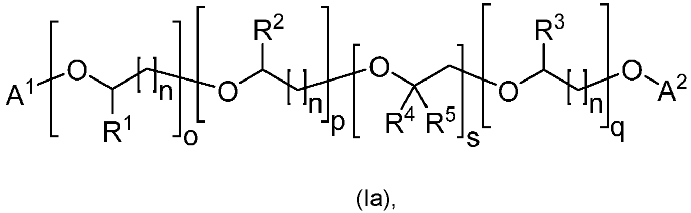 wherein each independently
- R⁴ and R⁵ are selected from the group consisting of hydrogen, methyl, ethyl, linear C3 to C5 alkyl, branched C3 to C5 alkyl and a moiety of formula (lb) 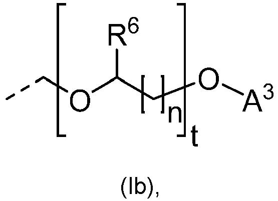
- R¹, R², R³, and R⁶ are selected from the group consisting of hydrogen, methyl and ethyl,
- A¹, A² and A³ are selected from the group consisting of hydrogen, methyl, ethyl, linear C3 to C12 alkyl, branched C3 to C12 alkyl, unsubstituted quinoline, substituted quinoline, unsubstituted isoquinoline, and substituted isoquinoline,
wherein
said substituted quinoline and substituted isoquinoline are independently substituted with one, two, three or more than three substituents, each substituent being independently selected from the group consisting of halogen, nitro, sulfonate, and alkoxy,
- s is 0 or 1,
- n is 1, 2 or 3,
- o, p, q, and t are integers in the range from 0 to 100,
with the proviso that
- at least one of A¹, A² and A³ is one of said substituted quinoline or said substituted isoquinoline, and
- o + p + q + t = 5 to 100.

14. Compound of formula (Ia) 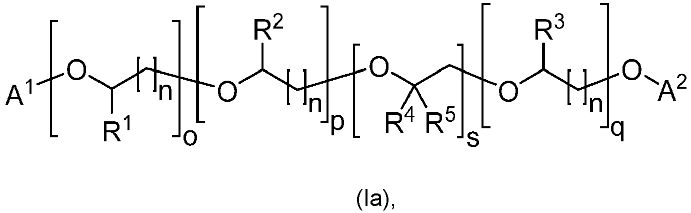 wherein
- s is 1,
- R⁵ is a moiety of formula (Ib) 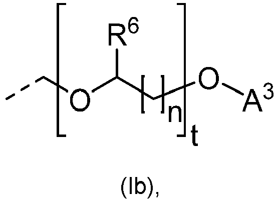
- R⁴ is selected from the group consisting of hydrogen, methyl, and ethyl,
- R¹, R², R³, and R⁶ are selected from the group consisting of hydrogen, methyl and ethyl,
- A¹, A² and A³ are independently substituted quinoline independently with one, two, three or more than three substituents, each substituent independently selected from the group consisting of halogen, alkyl, nitro, sulfonate, and alkoxy,
- n is 1, 2 or 3,
- o, p, q, and t are integers in the range from 0 to 100,
with the proviso that
- o + p + q + t = 5 to 100.

15. Use of one or more than one compound of formula (Ia) as defined in any of claims 13 and 14 as surfactant, preferably as surfactant in an acidic aqueous composition, more preferably as surfactant in an acidic aqueous composition with a pH of 3 or less, or as surfactant in a composition according to any of claims 1 to 10.

## Patentansprüche

1. Saure wässrige Zusammensetzung zur elektrolytischen Abscheidung eines Kupferniederschlags, wobei die Zusammensetzung
(i) Kupfer(II)-Ionen,
(ii) eine oder mehr als eine Verbindung der Formel (Ia) 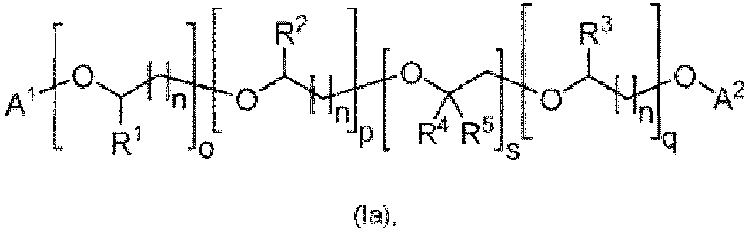 wobei, jeweils unabhängig,
- R⁴ und R⁵ aus der Gruppe bestehend aus Wasserstoff, Methyl, Ethyl, linearem C3- bis C5-Alkyl, verzweigtem C3-bis C5-Alkyl und einem Rest der Formel (Ib) ausgewählt sind, 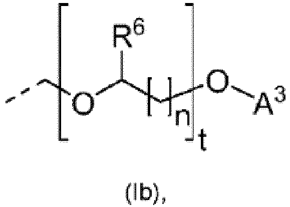
- R¹, R², R³ und R⁶ aus der Gruppe bestehend aus Wasserstoff, Methyl und Ethyl ausgewählt sind,
- A¹, A² und A³ aus der Gruppe bestehend aus Wasserstoff, Methyl, Ethyl, linearem C3- bis C12-Alkyl, verzweigtem C3- bis C12-Alkyl, unsubstituiertem Chinolin, substituiertem Chinolin, unsubstituiertem Isochinolin und substituiertem Isochinolin ausgewählt sind,
wobei
das substituierte Chinolin und das substituierte Isochinolin unabhängig mit einem, zwei, drei oder mehr als drei Substituenten substituiert sind, wobei jeder Substituent unabhängig aus der Gruppe bestehend aus Halogen, Alkyl, Nitro, Sulfonat und Alkoxy ausgewählt ist,
- s für 0 oder 1 steht,
- n für 1, 2 oder 3 steht,
- o, p, q, und t für ganze Zahlen im Bereich von 0 bis 100 stehen,
mit der Maßgabe, dass
- mindestens eins von A¹, A² und A³ unabhängig für das substituierte Chinolin oder das substituierte Isochinolin steht, und
- unabhängig o + p + q + t = 5 bis 100,
(iii) eine, zwei, drei oder mehr als drei weitere Verbindungen, die sich von der Verbindung der Formel (Ia) unterscheiden,
umfasst und
wobei die Zusammensetzung keine Zinnionen enthält.

2. Zusammensetzung nach Anspruch 1, wobei der pH-Wert der Zusammensetzung 3 oder weniger, vorzugsweise 2 oder weniger, noch weiter bevorzugt 1,5 oder weniger, ganz besonders bevorzugt 1 oder weniger, beträgt.

3. Zusammensetzung nach Anspruch 1 oder 2, wobei die Gesamtmenge der Kupfer(II)-Ionen in der Zusammensetzung 80 Gew.□% bis 100 Gew.□% aller Übergangsmetallkationen in der Zusammensetzung, vorzugsweise mindestens 90 Gew.□%, weiter bevorzugt mindestens 95 Gew.□%, noch weiter bevorzugt mindestens 99 Gew.□%, ganz besonders bevorzugt mindestens 99,5 Gew.□%, bezogen auf das Gesamtgewicht aller Übergangsmetallkationen in der Zusammensetzung, ausmacht.

4. Zusammensetzung nach einem der vorhergehenden Ansprüche, wobei die Zusammensetzung keine Bleiionen und Aluminiumionen enthält, vorzugsweise keine Metallionen der Hauptgruppen III, IV und V des Periodensystems enthält.

5. Zusammensetzung nach einem der vorhergehenden Ansprüche, wobei die Zusammensetzung keine Silberionen enthält, vorzugsweise keine Übergangsmetallionen mit Ausnahme von Eisenionen und den Kupfer(II)-Ionen enthält.

6. Zusammensetzung nach einem der vorhergehenden Ansprüche, wobei in Formel (Ia) s für 1 steht und R⁵ für einen Rest der Formel (Ib) steht, vorzugsweise s für 1 steht, R⁴ für Wasserstoff steht und R⁵ für einen Rest der Formel (Ib) steht, weiter bevorzugt s für 1 steht, p für 0 steht, R⁴ für Wasserstoff steht und R⁵ für einen Rest der Formel (Ib) steht.

7. Zusammensetzung nach einem der vorhergehenden Ansprüche, wobei in Formel (Ia)
- A¹, A² und A³ aus der Gruppe bestehend aus Wasserstoff, Methyl, Ethyl, linearem C3- bis C8-Alkyl, verzweigtem C3- bis C8-Alkyl, unsubstituiertem Chinolin, substituiertem Chinolin, unsubstituiertem Isochinolin und substituiertem Isochinolin ausgewählt sind, vorzugsweise
- A¹, A² und A³ aus der Gruppe bestehend aus Methyl, Ethyl, linearem C3- bis C5-Alkyl, verzweigtem C3- bis C5-Alkyl, unsubstituiertem Chinolin, substituiertem Chinolin, unsubstituiertem Isochinolin und substituiertem Isochinolin ausgewählt sind, weiter bevorzugt
- A¹, A² und A³ aus der Gruppe bestehend aus Methyl, Ethyl, unsubstituiertem Chinolin, substituiertem Chinolin, unsubstituiertem Isochinolin und substituiertem Isochinolin ausgewählt sind, ganz besonders bevorzugt
- A¹, A² und A³ aus der Gruppe bestehend aus Methyl, Ethyl, unsubstituiertem Chinolin und substituiertem Chinolin ausgewählt sind.

8. Zusammensetzung nach einem der vorhergehenden Ansprüche, wobei jeder Substituent in dem substituierten Chinolin und substituierten Isochinolin aus der Gruppe bestehend aus Halogen, Alkyl, Nitro und Sulfonat ausgewählt ist, vorzugsweise aus der Gruppe bestehend aus Halogen, Alkyl, Nitro ausgewählt ist, ganz besonders bevorzugt aus der Gruppe bestehend aus Halogen und Alkyl ausgewählt ist.

9. Zusammensetzung nach einem der vorhergehenden Ansprüche, wobei in Formel (Ia) mindestens eins von A¹, A² und A³ für eins der substituierten Chinoline steht, vorzugsweise mindestens zwei von A¹, A² und A³ für das substituierte Chinolin stehen.

10. Zusammensetzung nach einem der vorhergehenden Ansprüche, wobei o + p + q + t = 6 bis 80, vorzugsweise 7 bis 70, weiter bevorzugt 8 bis 50, noch weiter bevorzugt 10 bis 30, ganz besonders bevorzugt 12 bis 22.

11. Verwendung der sauren wässrigen Zusammensetzung nach einem der Ansprüche 1 bis 10 zur elektrolytischen Abscheidung eines Kupferniederschlags, vorzugsweise zur elektrolytischen Abscheidung eines Kupferniederschlags, wobei es sich bei mindestens 90 Gewichts-%, weiter bevorzugt mindestens 95 Gewichts-%, ganz besonders bevorzugt mindestens 99,5 Gewichts-%, des Kupferniederschlags, bezogen auf das Gesamtgewicht des Kupferniederschlags, um Kupfer handelt.

12. Verfahren zur elektrolytischen Abscheidung eines Kupferniederschlags auf ein Substrat, wobei das Verfahren die Schritte
(a) Bereitstellen des Substrats,
(b) Bereitstellen einer wässrigen Zusammensetzung nach einem der Ansprüche 1 bis 10,
(c) Inkontaktbringen des Substrats mit der wässrigen Zusammensetzung und Anlegen eines elektrischen Stroms derart, dass Kupfer elektrolytisch auf das Substrat zum Erhalt des Kupferniederschlags abgeschieden wird, umfasst.

13. Verbindung der Formel (Ia) 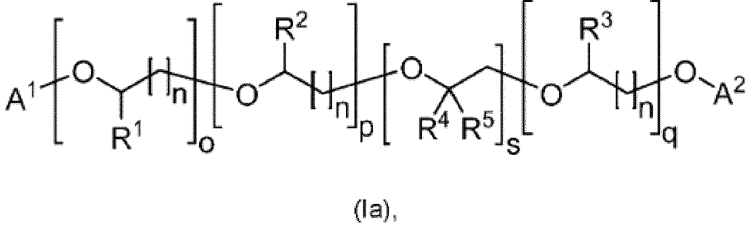 wobei, jeweils unabhängig,
- R⁴ und R⁵ aus der Gruppe bestehend aus Wasserstoff, Methyl, Ethyl, linearem C3- bis C5-Alkyl, verzweigtem C3-bis C5-Alkyl und einem Rest der Formel (Ib) ausgewählt sind, 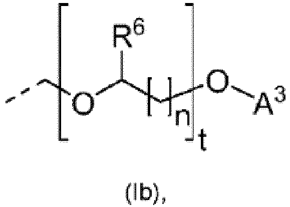
- R¹, R², R³ und R⁶ aus der Gruppe bestehend aus Wasserstoff, Methyl und Ethyl ausgewählt sind,
- A¹, A² und A³ aus der Gruppe bestehend aus Wasserstoff, Methyl, Ethyl, linearem C3- bis C12-Alkyl, verzweigtem C3- bis C12-Alkyl, unsubstituiertem Chinolin, substituiertem Chinolin, unsubstituiertem Isochinolin und substituiertem Isochinolin ausgewählt sind,
wobei
das substituierte Chinolin und das substituierte Isochinolin unabhängig mit einem, zwei, drei oder mehr als drei Substituenten substituiert sind, wobei jeder Substituent unabhängig aus der Gruppe bestehend aus Halogen, Alkyl, Nitro, Sulfonat und Alkoxy ausgewählt ist,
- s für 0 oder 1 steht,
- n für 1, 2 oder 3 steht,
- o, p, q, und t für ganze Zahlen im Bereich von 0 bis 100 stehen, mit der Maßgabe, dass
- mindestens eins von A¹, A² und A³ für das substituierte Chinolin oder das substituierte Isochinolin steht, und
- o + p + q + t = 5 bis 100.

14. Verbindung der Formel (Ia) 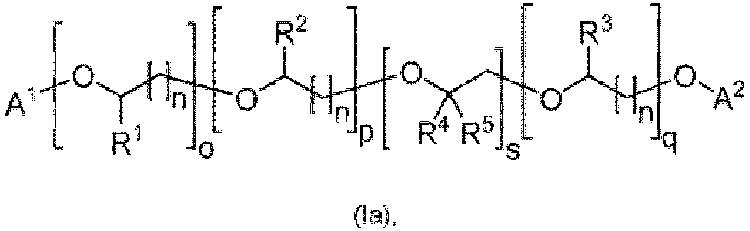 wobei
- s für 1 steht,
- R⁵ für einen Rest der Formel (Ib) steht, 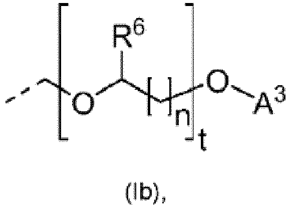
- R⁴ aus der Gruppe bestehend aus Wasserstoff, Methyl und Ethyl ausgewählt ist,
- R¹, R², R³ und R⁶ aus der Gruppe bestehend aus Wasserstoff, Methyl und Ethyl ausgewählt sind,
- A¹, A² und A³ unabhängig für ein substituiertes Chinolin stehen, das unabhängig mit einem, zwei, drei oder mehr als drei Substituenten substituiert ist, wobei jeder Substituent unabhängig aus der Gruppe bestehend aus Halogen, Alkyl, Nitro, Sulfonat und Alkoxy ausgewählt ist,
- n für 1, 2 oder 3 steht,
- o, p, q und t für ganze Zahlen im Bereich von 0 bis 100 stehen,
mit der Maßgabe, dass
- o + p + q + t = 5 bis 100.

15. Verwendung einer oder mehr als einer Verbindung der Formel (Ia) gemäß einem der Ansprüche 13 und 14 als Tensid, vorzugsweise als Tensid in einer sauren wässrigen Zusammensetzung, weiter bevorzugt als Tensid in einer sauren wässrigen Zusammensetzung mit einem pH-Wert von 3 oder weniger oder als Tensid in einer Zusammensetzung nach einem der Ansprüche 1 bis 10.

## Revendications

1. Composition aqueuse acide pour le dépôt électrolytique d'un dépôt de cuivre, la composition comprenant
(i) des ions cuivre(II),
(ii) un ou plus d'un composé de formule (la) 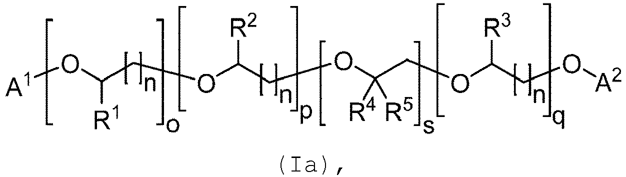 dans laquelle chacun indépendamment
- R⁴ et R⁵ sont choisis dans le groupe constitué par l'atome d'hydrogène, les groupes méthyle, éthyle, alkyle en C3 à C5 linéaires et alkyle en C3 à C5 ramifiés et une fraction de formule (Ib) 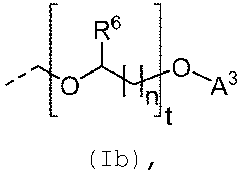
- R¹, R², R³ et R⁶ sont choisis dans le groupe constitué par l'atome d'hydrogène et les groupes méthyle et éthyle,
- A¹, A² et A³ sont choisis dans le groupe constitué par l'atome d'hydrogène, les groupes méthyle, éthyle, alkyle en C3 à C12 linéaires et alkyle en C3 à C12 ramifiés, la quinoléine non substituée, la quinoléine substituée, l'isoquinoléine non substituée et l'isoquinoléine substituée,
dans lesquels
lesdites quinoléine substituée et isoquinoléine substituée sont indépendamment substituées par un, deux, trois ou plus de trois substituants, chaque substituant étant indépendamment choisi dans le groupe constitué par les substituants halogéno, alkyle, nitro, sulfonate et alcoxy,
- s est 0 ou 1,
- n est 1, 2 ou 3,
- o, p, q et t sont des nombres entiers dans la plage de 0 à 100,
à condition que
- au moins l'un de A¹, A² et A³ soit indépendamment l'une de ladite quinoléine substituée ou de ladite isoquinoléine substituée et
- indépendamment o + p + q + t = 5 à 100,
(iii) un, deux, trois ou plus de trois autres composés, qui sont différents du composé de formule (Ia) et la composition ne contenant pas d'ions étain.

2. Composition selon la revendication 1, le pH de la composition étant inférieur ou égal à 3, de préférence inférieur ou égal à 2, plus préférablement encore inférieur ou égal à 1,5, le plus préférablement inférieur ou égal à 1.

3. Composition selon la revendication 1 ou 2, la quantité totale desdits ions cuivre(II) dans la composition représentant 80 % en poids à 100 % en poids de tous les cations de métaux de transition dans la composition, par rapport au poids total de tous les cations de métaux de transition dans la composition, de préférence au moins 90 % en poids, plus préférablement au moins 95 % en poids, plus préférablement encore au moins 99 % en poids, le plus préférablement au moins 99,5 % en poids.

4. Composition selon l'une quelconque des revendications précédentes, la composition ne contenant pas d'ions plomb et d'ions aluminium, de préférence ne contenant pas de quelconques ions de métaux des groupes principaux III, IV et V du tableau périodique.

5. Composition selon l'une quelconque des revendications précédentes, la composition ne contenant pas d'ions argent, de préférence ne contenant pas de quelconques ions de métaux de transition à l'exception d'ions fer et desdits ions cuivre(II).

6. Composition selon l'une quelconque des revendications précédentes, dans laquelle dans la formule (Ia) s est 1 et R⁵ est une fraction de formule (Ib), de préférence s est 1, R⁴ est l'atome d'hydrogène et R⁵ est une fraction de formule (Ib), plus préférablement s est 1, p est 0, R⁴ est l'atome d'hydrogène et R⁵ est une fraction de formule (Ib).

7. Composition selon l'une quelconque des revendications précédentes, dans laquelle dans la formule (Ia)
- A¹, A² et A³ sont choisis dans le groupe constitué par l'atome d'hydrogène, les groupes méthyle, éthyle, alkyle en C3 à C8 linéaires et alkyle en C3 à C8 ramifiés, la quinoléine non substituée, la quinoléine substituée, l'isoquinoléine non substituée et l'isoquinoléine substituée, de préférence
- A¹, A² et A³ sont choisis dans le groupe constitué par les groupes méthyle, éthyle, alkyle en C3 à C5 linéaires et alkyle en C3 à C5 ramifiés, la quinoléine non substituée, la quinoléine substituée, l'isoquinoléine non substituée et l'isoquinoléine substituée, plus préférablement
- A¹, A² et A³ sont choisis dans le groupe constitué par les groupes méthyle et éthyle, la quinoléine non substituée, la quinoléine substituée, l'isoquinoléine non substituée et l'isoquinoléine substituée, le plus préférablement
- A¹, A² et A³ sont choisis dans le groupe constitué par les groupes méthyle et éthyle, la quinoléine non substituée et la quinoléine substituée.

8. Composition selon l'une quelconque des revendications précédentes, dans laquelle chaque substituant dans lesdites quinoléine substituée et isoquinoléine substituée sont indépendamment choisis dans le groupe constitué par les substituants halogéno, alkyle, nitro et sulfonate, de préférence choisis dans le groupe constitué par les substituants halogéno, alkyle et nitro, le plus préférablement choisis dans le groupe constitué par les substituants halogéno et alkyle.

9. Composition selon l'une quelconque des revendications précédentes, dans laquelle dans la formule (Ia) au moins l'un de A¹, A² et A³ est l'une de ladite quinoléine substituée, de préférence au moins deux de A¹, A² et A³ sont ladite quinoléine substituée.

10. Composition selon l'une quelconque des revendications précédentes, dans laquelle o + p + q + t = 6 à 80, de préférence 7 à 70, plus préférablement 8 à 50, plus préférablement encore 10 à 30, le plus préférablement 12 à 22.

11. Utilisation d'une composition aqueuse acide selon l'une quelconque des revendications 1 à 10 pour le dépôt électrolytique d'un dépôt de cuivre,
de préférence pour le dépôt électrolytique d'un dépôt de cuivre, dans laquelle au moins 90 % en poids du dépôt de cuivre est du cuivre, par rapport au poids total du dépôt de cuivre, plus préférablement au moins 95 % en poids, le plus préférablement au moins 99,5 % en poids.

12. Procédé pour le dépôt électrolytique d'un dépôt de cuivre sur un substrat, le procédé comprenant les étapes
(a) fourniture du substrat,
(b) fourniture d'une composition aqueuse selon l'une quelconque des revendications 1 à 10,
(c) mise en contact du substrat avec la composition aqueuse et application d'un courant électrique de façon telle que du cuivre est déposé par voie électrolytique sur le substrat pour obtenir le dépôt de cuivre.

13. Composé de formule (Ia) 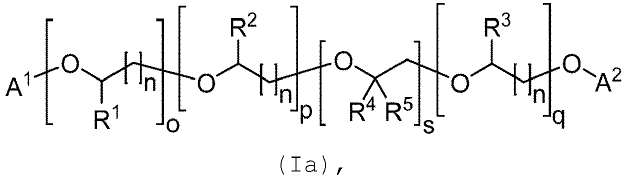 dans lequel chacun indépendamment
- R⁴ et R⁵ sont choisis dans le groupe constitué par l'atome d'hydrogène, les groupes méthyle, éthyle, alkyle en C3 à C5 linéaires et alkyle en C3 à C5 ramifiés et une fraction de formule (Ib) 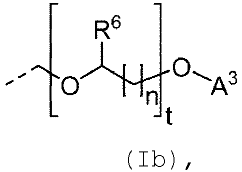
- R¹, R², R³ et R⁶ sont choisis dans le groupe constitué par l'atome d'hydrogène et les groupes méthyle et éthyle,
- A¹, A² et A³ sont choisis dans le groupe constitué par l'atome d'hydrogène, les groupes méthyle, éthyle, alkyle en C3 à C12 linéaires et alkyle en C3 à C12 ramifiés, la quinoléine non substituée, la quinoléine substituée, l'isoquinoléine non substituée et l'isoquinoléine substituée,
dans lesquels
lesdites quinoléine substituée et isoquinoléine substituée sont indépendamment substituées par un, deux, trois ou plus de trois substituants, chaque substituant étant indépendamment choisi dans le groupe constitué par les substituants halogéno, alkyle, nitro, sulfonate et alcoxy,
- s est 0 ou 1,
- n est 1, 2 ou 3,
- o, p, q et t sont des nombres entiers dans la plage de 0 à 100,
à condition que
- au moins l'un de A¹, A² et A³ soit indépendamment l'une de ladite quinoléine substituée ou de ladite isoquinoléine substituée et
- o + p + q + t = 5 à 100.

14. Composé de formule (Ia) 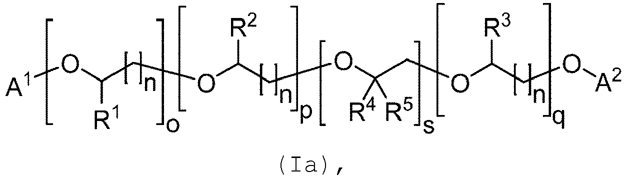 dans lequel
- s est 1,
- R⁵ est une fraction de formule (Ib) 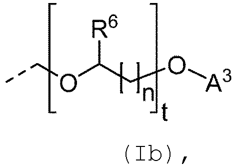
- R⁴ est choisi dans le groupe constitué par l'atome d'hydrogène et les groupes méthyle et éthyle,
- R¹, R², R³ et R⁶ sont choisis dans le groupe constitué par l'atome d'hydrogène et les groupes méthyle et éthyle,
- A¹, A² et A³ sont indépendamment la quinoléine substituée indépendamment par un, deux, trois ou plus de trois substituants, chaque substituant étant indépendamment choisi dans le groupe constitué par les substituants halogéno, alkyle, nitro, sulfonate et alcoxy,
- n est 1, 2 ou 3,
- o, p, q et t sont des nombres entiers dans la plage de 0 à 100,
à condition que
- o + p + q + t = 5 à 100.

15. Utilisation d'un ou plus d'un composé de formule (Ia) tel que défini dans l'une quelconque des revendications 13 et 14 en tant que tensioactif, de préférence en tant que tensioactif dans une composition aqueuse acide, plus préférablement en tant que tensioactif dans une composition aqueuse acide ayant un pH inférieur ou égal à 3, ou en tant que tensioactif dans une composition selon l'une quelconque des revendications 1 à 10.
